Europäisches Patentamt

European Patent Office

Office européen des brevets

(19)

(11) Veröffentlichungsnummer: **0 208 075**
**B1**

(12) **EUROPÄISCHE PATENTSCHRIFT**

(45) Veröffentlichungstag der Patentschrift:
06.09.89

(51) Int. Cl.⁴: **B32B 27/32**, C08L 23/04,
C09J 3/14

(21) Anmeldenummer: 86105900.4

(22) Anmeldetag: 29.04.86

(54) Heisssiegelbare Mehrschichtenfolien mit geringer Gasdurchlässigkeit und ihre Verwendung als Verpackungsmaterial.

(30) Priorität: 12.06.85 DE 3520944

(43) Veröffentlichungstag der Anmeldung:
14.01.87 Patentblatt 87/3

(45) Bekanntmachung des Hinweises auf die Patenterteilung:
06.09.89 Patentblatt 89/36

(84) Benannte Vertragsstaaten:
AT BE CH DE FR GB IT LI NL SE

(56) Entgegenhaltungen:
EP-A- 0 062 815
EP-A- 0 151 462
DE-A- 3 233 693
US-A- 4 230 767

(73) Patentinhaber: Wolff Walsrode Aktiengesellschaft,
Postfach, D-3030 Walsrode 1(DE)

(72) Erfinder: Schinkel, Ingo, Dipl.-Ing., Witternstrasse 14,
D-3030 Walsrode(DE)
Erfinder: Böhner, Jürgen, Dipl.-Ing., Am Haselbusch 3,
D-3036 Bomlitz(DE)

(74) Vertreter: Zobel, Manfred, Dr. et al, c/o BAYER AG
Konzernverwaltung RP Patentabteilung Bayerwerk,
D-5090 Leverkusen(DE)

## Beschreibung

Die vorliegende Erfindung betrifft eine heißsiegelbare gereckte Mehrschichtfolie, die sich wegen ihrer Gassperreigenschaften besonders als Verpackungsfolie für solche Güter eignet, die geringe Gasdurchlässigkeit und Aromaschutz erfordern.

Die Verwendung von Verbundfolien aus Polyolefinen mit einer siegelbaren Schicht aus Ethylenhomo- oder -copolymerisaten als Verpackungsfolie ist seit langem bekannt. Es wurde auch bereits versucht, die Gasundurchlässigkeit solcher Verbundfolien durch Einbau einer Schicht aus verseiftem Ethylenvinylacetat zu verbessern. So wird in der DE-A 2 644 209 eine Verbundfolie aus Polypropylen, einer Haftvermittlerschicht aus modifiziertem Polyolefin, einer Schicht aus verseiftem Ethylenvinylacetatcopolymerisat und gegebenenfalls einer heißsiegelfähigen Schicht aus Polyolefinen beschrieben. Gemäß der Lehre der EP-A 0 062 815 gelingt es, die Verarbeitungseigenschaften dieser Verbundfolien entscheidend zu verbessern. Für einige Einsatzge biete dieser Folien ist aber die Temperatur, bei der ausreichend feste Siegelnähte gebildet werden, zu hoch und/oder die Gassperreigenschaften nicht voll zufriedenstellend.

Es stellte sich daher die Aufgabe, Mehrschichtfolien, insbesondere Verpackungsfolien zur Verfügung zu stellen, die nicht nur eine sehr niedrige Siegelanspringtemperatur, hohe Siegelfestigkeit und eine gute Optik, sondern auch eine ausgezeichnete Maschinengängigkeit auf den üblichen Verpackungsmaschinen unterschiedlichen Typs und herausragende Gassperreigenschaften aufweisen.

Erfindungsgemäß gelang dies durch Bereitstellen einer heißsiegelbaren wenigstens monoaxial gereckten Mehrschichtfolie aus Propylenpolymeren als Basisschicht, die auf wenigstens einer Oberfläche eine Schichtkombination angeordnet hat, die sich von außen her bis zur Basisschicht zusammensetzt aus

A) einer heißsiegelbaren Außenschicht aus
a) 66,5 bis 94,5, vorzugsweise 78 bis 89,1 Gew.-% eines linearen statistischen Ethylencopolymerisats niedriger Dichte (LLDPE),
b) 5 bis 30 Gew.-%, vorzugsweise 10 bis 20 Gew.-% eines niedermolekularen, mit dem LLDPE verträglichen Harzes, mit Ausnahme eines niedermolekularen Harzes von $\alpha$-Olefinen mit höchstens 3 C-Atomen, wie z.B. einem niedermolekularen Polyethylen oder Polypropylen
c) 0,3 bis 2, vorzugsweise 0,5 bis 1 Gew.-% einer Mischung aus einem Polyethylenwachs und einem Oxazolinwachs,
d) 0,2 bis 1,5, vorzugsweise 0,4 bis 1 Gew.-% Polydiorganosiloxan und
e) gegebenenfalls üblichen Additiven und Hilfsstoffen,
wobei die Summe der Komponenten a) bis d) immer 100 Gew.-% ergeben muß,
B) gegebenenfalls einer Schicht aus einem Propylenpolymeren,
C) einer Haftvermittlerschicht enthaltend modifiziertes Polyolefin,
D) einer Gassperrschicht auf Basis von verseiftem Ethylenvinylacetatcopolymerisat mit 40 bis 85 Mol-% Vinylacetateinheiten, die zu wenigstens 90 % verseift sind,
E) einer Haftvermittlerschicht enthaltend modifiziertes Polyolefin, und gegebenenfalls
F) einer Schicht aus LLDPE und gegebenenfalls den Komponenten b) - e) in den angegebenen Mengen,

wobei die Basisschicht auf ihrer anderen Oberfläche gegebenenfalls eine siegelbare Schicht A, eine Schichtkombination A bis E oder eine Schichtkombination A bis F, eine Schichtkombination B bis D oder eine Schichtkombination E und D oder eine Schicht aus einer Mischung aus den Polymeren der Schicht C und D trägt.Gegebenenfalls können die Schichten A und C und/oder die Schichten B und C und/oder die Schichten E und F oder die Schichten C und D und/oder die Schichten D und E zu einer Schicht durch Vermischen der entsprechenden Polymeren vereinigt werden.

Die Basisschicht und die gegebenenfalls vorhandene Schicht B der erfindungsgemäßen siegelbaren Mehrschichtfolie besteht aus einem Propylenpolymeren, das bis zu höchstens 10 Gew.-% eines weiteren $\alpha$-Olefins mit höchstens 8 C-Atomen, vorzugsweise Ethylen enthält. Vorzugsweise wird ein isotaktisches Polypropylen mit einer Dichte von 0,9 bis 0,91 g pro $cm^3$ und einem Schmelzflußindex von 1 bis 4 g / 10 Minuten bei 230°C/21,6 N (nach DIN 53 735) verwendet. Vorzugsweise besteht die Basisschicht und die Schicht B aus demselben Polymeren.

Die Basisschicht kann 3 - 15 Gew.-%, vorzugsweise 8 - 12 Gew.-%, mit den Propylenpolymeren unverträgliche Additive, vorzugsweise ein anorganisches Additiv wie $CaCO_3$, $SiO_2$, Na-Al-silikat und/oder $TiO_2$ enthalten, wodurch eine Opakisierung der Folie erreicht wird.

Es kann aber auch ein organisches unverträgliches Additiv in der Basisschicht enthalten sein, vorzugsweise Polystyrol, Polymethylmethacrylat, Polytetrafluorethylen und/oder Copolymere dieser Verbindungen. Unverträglich bedeutet dabei, daß solche polymeren Additive einen anderen Schmelzpunkt und/oder ein anderes Streckverhältnis als das Propylenpolymere aufweisen, und daß es beim Orientierungsprozeß zum Aufreißen der Polymermatrix und damit zur Vakuolenbildung kommt, wie dies auch bei Verwendung anorganischer Additive stattfindet.

Der Hauptbestandteil der siegelbaren Schicht und gegebenenfalls der Schicht F, ist ein lineares statistisches Ethylencopolymers niedriger Dichte, das man durch Copolymerisation von Ethylen mit bis zu 12 Mol-%, vorzugsweise 2 - 8 Mol-%, α-Olefinen mit $C_3$ bis $C_{10}$ herstellt, vorzugsweise mit Propylen, Buten-1, Penten, Hexen, Octen, Nonen, Decen oder 4-Methylpenten-1, besonders bevorzugt 1-Buten, Hexen oder Octen, bei Polymerisationsbedingungen, bei denen man normalerweise Polyethylen hoher Dichte erhält, d. h. bei niedrigen Drucken und Temperaturen in Gegenwart von organometallischen Katalysatoren. Verfahren zur Herstellung von linearen Ethylencopolymerisaten mit niedriger Dichte sind in den US-Patenten Nr. 36 45 992 und 40 11 382 beschrieben. Die Ethylencopolymerisate, die erfindungsgemäß verwendet werden, sollten eine Dichte unterhalb von 0,94, vorzugsweise eine Dichte von 0,900 bis 0,925, besonders bevorzugt 0,903 bis 0,92 g / cm³, aufweisen.

Als niedermolekulare, mit dem LLPDE verträgliche Harze können natürliche oder synthetische Harze mit einem Erweichungspunkt von 60 bis 180°C, bevorzugt 80 bis 100°C, verwendet werden. Es sind solche Harze als verträglich anzusehen, die in einer Konzentration bis zu 30 Gew.-% der Siegelschicht zugemischt werden können, ohne daß eine Verschlechterung der optischen Eigenschaften der Folie eintritt. Hierfür können Collophonium, Dammarharze, Terpentinharze, Kohlenwasserstoffharze, Ketonharze, Phenolharze, chlorierte aliphatische oder aromatische Kohlenwasserstoffharze verwendet werden. Diese Harze sind in Ullmanns Encyclopädie der technischen Chemie, Band 12, 1976, Seiten 525 bis 555 beschrieben.

Vertreter der natürlichen Harze sind Collophonium und Dammarharze. Ersteres wird durch Abdestillieren von Terpentinöl aus den Harzen von Kiefern oder Wurzelstöcken gewonnen. Auch Collophoniumester sowie modifiziertes Collophonium wie dehydriertes, hydriertes oder fraktioniertes Collophonium wird darunter verstanden.

Dammarharze sind ebenfalls natürliche Harze, die farblose bis gelbe Stoffe darstellen, die ebenfalls durch Lebendharzung gewonnen werden.

Als Kohlenwasserstoffharze bezeichnet man Polymerisate aus Kohlenstoff und Wasserstoff, die man bei der Kohlenteerdestillation bei Crackprozessen von Naphtha- bzw. Gasöl aus Kokereigas oder aus Terpentinöl gewinnt. Typische Vertreter dieser Harze sind Cumeronharze, Erdölharze, Terpenharze, Styrolharze, Cyclopentadienharze. Unter Cumeronharze versteht man Kohlenwasserstoffharze, die man aus Kokereigas oder durch Polymerisation von Harzbildnern, wie sie in den Steinkohlenteerdestillationen vorhanden sind, erhalten werden, wobei durch Copolymerisation mit Phenol modifizierte Cumeronharze gewonnen werden.

Bei der Crackung von Naphtho- oder Gasöl erhält man die Rohstoffbasis aus der die Erdölharze gewonnen werden.

Harzbildende Verbindungen sind unter anderem Buten, Butadien, Penten, Piperylen, Isopren, Cyclopentadien, Dicyclopentadien, Alkylbenzole, Methyldicyclopentadien, Methylinden, Naphthalinstyrolinden, Vinyltoluol, Methylstyrol.

Homopolymere mit geringem Molekulargewicht von Styrol und weiteren Copolymeren wie α-Methylstyrol, Vinyltoluol und Butadien sind ebenfalls als niedermolekulare Harze geeignet.

Die Cyclopentadienharze werden aus Steinkohlenteerdestillaten und abgetrennten Erdölgasen hergeleitet. Die Polymerisate erhält man, indem die ungesättigten Verbindungen über einen längeren Zeitraum hohen Temperaturen aussetzt.

Die Terpenharze gewinnt man durch Polymerisation von Terpenen wie z. B. von β-Pinen, α-Pinen, Dipenten, Limonen, Myzen, Bormylen, Camphen und ähnlichen Terpenen.

Die chlorierten aliphatischen oder aromatischen Kohlenwasserstoffe enthalten im allgemeinen 30 bis 70 Gew.-% Chlor und sind unter dem Namen Chlorwachse bekannt bzw. leiten sich vom Biphenylchlorid, Terphenyl oder deren Mischungen ab.

Die genannten Kohlenwasserstoffharze können auch als modifizierte Produkte eingesetzt werden, wobei eine Modifizierung durch Copolymerisation mit speziellen Monomeren oder durch Reaktion mit weiteren Polymerisaten, insbesondere aber eine Hydrierung oder Teilhydrierung der unge sättigten Bestandteile der Harze möglich ist. Bevorzugt werden polycyclische hydrierte Kohlenwasserstoffharze insbesondere auf Basis von Cyclopentadien eingesetzt.

Auch Phenolharze, die man durch Reaktion von Phenolen und Aldehyden erhält, sind geeignet. Neben Phenol können Kresol, Xylenol, Paraphenylphenol mit Formaldehyd, Furfurylaldehyd oder Acetaldehyd kondensiert werden.

Als Komponente c) enthält die siegelbare Schicht A) eine Mischung aus Polyolefinwachs, vorzugsweise einen Polyethylenwachs und einen Oxazolinwachs, hergestellt aus Stearinsäure und einem Aminoalkohol. Als Aminoalkohol wird bevorzugt Trishydroxymethylaminomethan eingesetzt. Die beiden Mischungskomponenten können in einem breiten Mischungsbereich verwendet werden, vorzugsweise in einem Mischungsverhältnis von 1:1.

Weiterhin enthält die siegelbare Schicht Polydiorganosiloxane oder deren Mischungen, die bei 25°C eine kinematische Viskosität von mindestens 100 mm² pro Sekunde aufweisen. Geeignete Polydiorganosiloxane sind Polydialkylsiloxane, Polyalkylphenylsiloxane, olefinmodifizierte Siloxanöle, polyethermodifizierte Siloxanöle, olefin/polyethermodifizierte Silikonöle, epoxymodifizierte Silikonöle und alkoholmodifizierte Silikonöle, Polydialkylsiloxane mit vorzugsweise $C_1$ bis $C_4$ in der Alkylgruppe, insbesondere Polydimethylsiloxan ist besonders geeignet. Vorzugsweise sollten die Polydiorganosiloxane eine kinematische Viskosität von wenigstens $10^5$ mm² / Sekunde bei 25°C, besonders bevorzugt von wenigstens $10^6$ mm² / Sekunde aufweisen.

Die Gassperrschicht D wird vorzugsweise aus einem Ethylen/Vinylacetat-Copolymerisat, das aus 40 bis 85 Mol-%, bevorzugt aus 60 - 75 Mol-% Vinylacetateinheiten, besteht, die zumindestens zu 90 %, vorzugsweise zu mehr als 95 Mol-%, verseift sind, gebildet. Die Grenzviskositätszahl [$\sigma$] der Polymeren, gemessen in einer Lösungsmittelmischung aus 85 Gew.-% Phenol und 15 Gew.-% Wasser, sollte vorzugsweise zwischen 0,07 und 0,17 l/g, besonders bevorzugt zwischen 0,09 und 0,15 l/g liegen.

Die Gassperrschicht, die insbesondere als Sauerstoffund/oder Aromabarriereschicht dient, kann noch weitere Polymere mit Gassperreigenschaften wie z. B. Polyvinylalkohol oder Polyamide enthalten. Besonders geeignet sind Mischungen von Ethylen/Vinylalkoholcopolymeren und 10 -60 Gew.-% der genannten Polymeren. Als Polyamide eignen sich besonders Polyamid 6,12 oder Polyamid 6,6.

Geeignete Mischungen sind auch solche Mischungen, die in der EP-A 0064330 und EP-A 0063006 beschrieben werden, wo zur Herstellung der Gassperrschicht Mischungen aus Ethylen/Vinylalkoholcopolymeren und Polyamiden verwendet werden, die zusätzlich geeignete Weichmacher enthalten.

Zur Herstellung der Haftvermittlerschichten werden vorzugsweise modifizierte Polyolefine eingesetzt. Vorzugsweise sind dies Homo- oder Co-Polyolefine mit Carboxylgruppen wie z. B. Polypropylen oder Polyethylen, die mindestens ein Monomer aus der Gruppe der $\alpha,\beta$-einfach ungesättigten Dicarbonsäuren, wie z.B. Maleninsäure, Fumarsäure, Itaconsäure oder deren Säureanhydride, Säureester, Säureamide und Säureimide aufgepfropft enthalten, Copolymerisate von Ethylen mit $\alpha,\beta$-einfach ungesättigten Carbonsäuren, wie Acrylsäure, Methycrylsäure und/oder deren Metallsalzen (Zn, Na) und/oder deren Alkyl ($C_1$-$C_4$)estern oder entsprechende Pfropfpolymere der genannten Monomere auf Polyolefine wie Polyethylen oder Polypropylen; oder partiell verseifte Ethylen/Vinylacetat-Copolymerisate, die gegebenenfalls mit einem Monomer der obengenannten ungesättigten Säuren pfropfpolymerisiert sind und einen niedrigen Verseifungsgrad aufweisen, oder Mischungen der genannten Polymerisate.

Besonders bevorzugt sind Polyolefine wie Polypropylen oder Copolymerisate von Propylen und Ethylen, mit maximal 1,0 Gew.-% aufgepfropften $\alpha,\beta$-einfach ungesättigtem Dicarbonsäureanhydrid wie Maleinsäureanhydrid oder deren verseifte Copolymerisate, gegebenenfalls gemischt mit Polyolefinen.

Wird das Haftvermittlerpolymere entweder in die siegelbare Schicht A und/oder in die Schicht B oder in die Gassperrschicht D eingearbeitet, so werden vorzugsweise bis 40 Gew.-%, vorzugsweise 25 bis 30 Gew.-%, bezogen auf das schichtbildende Polymere, verwendet.

Eine Ausrüstung der Schichten mit üblichen Additiven und Hilfsmitteln wie z. B. Gleitmitteln, Antiblockmitteln und Antistatika in üblichen Mengen ist möglich. So können ungesättigte Fettsäureamide, gesättigte Fettsäureamide wie z. B. Stearinsäureamid, Erucasäureamid, mit dem Polymeren der Siegelschicht unverträgliche thermoplastische Polymere wie z. B. Polyamid-12, anorganische Abstandshalter wie $SiO_2$, $CaCo_3$ oder antistatische Verbindungen wie langkettige aliphatische tertiäre Amine, die gegebenenfalls einfach ungesättigt sein können, wie ethoxylierte tertiäre Amine, z. B. N,N-Bis-(2-Hydroxyethyl)($C_{12}$ bis $C_{16}$)-alkylamin eingesetzt werden.

Die erfindungsgemäßen Mehrschichtfolien können nach üblichen Verfahren wie Laminierung, Beschichtung oder Schmelz(Co)extrusion hergestellt werden, wobei die Kombination, aus der die siegelbare Schicht besteht, durch Masterbatch, vorzugsweise aber durch direkte Compoundierung hergestellt werden kann.

Die erfindungsgemäßen Mehrschichtfolien werden mindestens monoaxial, bevorzugt biaxial gereckt. Dabei wird die Längsreckung vorzugsweise im Verhältnis 5:1 bis 7:1 und die Querreckung im Verhältnis 7:1 bis 10:1 vorgenommen.

Die erfindungsgemäße Mehrschichtfolie weist vorzugsweise eine Gesamtdicke von 10 bis 100 $\sigma$m, besonders bevorzugt von 25-50 $\sigma$m, auf, wobei die Basisschicht und die gegebenenfalls vorhandene Schicht B den überwiegenden Anteil an der Schichtdicke ausmachen.

Die erfindungsgemäßen Mehrschichtfolien eignen sich besonders als Verpackungsmaterial für sauerstoffempfindliche Lebensmittel und als Aromaschutz, und können zu diesem Zweck bedruckt und mit Aufreißstreifen versehen werden.

In den nachfolgenden Beispielen wurden folgende Prüfmethoden zur Bestimmung der Werte verwendet.

Die Trübung wurde nach ASTM D 1003-52 bestimmt.

Zur Bestimmung der Klarheit und des Glanzes der Folie wurde ein photoelektrischer Glanzmesser nach Dr. B. Lange, Berlin, bestehend aus einer Niedervoltglühlampe und einem Kondesor, die unter 45° die Probe beleuchten und einem zweiten unter 45° zur Meßebene stehenden Schenkel mit Lochblende und Photozelle benutzt. Angeschlossen ist ein fein regulierbares Anzeigegerät (Mikroampermeter), das außerdem die Stromversorgung und den Spannungskonstanthalter für die Glühlampe enthält. Der Glanz ist definiert als der unter 45° regulär reflektierte Lichtanteil in Prozenten, bezogen auf einen oberflächenversilberten Spiegel als 100 %iger Standard. Bei der Prüfung des Glanzes wird auf den Glanzmesser eine polierte Schwarzglasplatte als Zwischenstandard gesetzt, weil der Silberspiegelstandard nicht beständig im Anlaufen durch Luftverunreinigung ist. Dieser weist genau 5 % des Glanzes einer oberflächenversilberten Spiegelglasplatte auf. Die Galvanometeranzeige der Photozelle des Glanzmessers wird daher über den Schwarzglaszwischenstandard zwecks Erhöhung der Ablesegenauigkeit der Mikroeinteilung mit dem Regelpotentiometer eingestellt. Die zu prüfende Folie wird quer zur Laufrichtung, bezogen auf die optische Achse des Glanzmessers, über mattschwarzem Photopapier plan unter den Glanzmesser gelegt und an fünf einwandfreien Stellen gemessen. Man teilt die Galvanometeranzeige durch zehn und ermittelt den Mittelwert. Die Klarheit einer Folie ist definiert aus der nach zweimaligem Passieren der Folie unter 45° verbleibende Lichtanteil in Prozenten, bezogen auf die Einstellung des Meßgerätes auf 100 % ohne Prüffolie. Dazu stellt man den Glanzmesser ohne Prüffolie auf eine polierte hochglanzver chromte Eisenplatte und stellt die Galvanometeranzeige der Photozelle des Glanzmessers mit dem Regelpotentiometer auf 100 Scalenteile. Aus der zu prüfenden Folie schneidet man quer über die Bahnbreite in Längsrichtung mit Hilfe einer Metallschablone fünf Probestreifen (3 x 15 cm) aus und legt diese nacheinander über zwei je 9 mm hohe, 29,5 mm breite Messingstege, die sich in 53 mm Abstand auf der verchromten Eisenplatte befinden und stülpt den Glanzmesser mit seiner Bodenöffnung darüber. Auf dem Galvanometer kann nun direkt die Klarheit der Folie in Prozenten abgelesen werden. Angegeben wird der Mittelwert der Einzelwerte.

Zur Bestimmung der Festigkeit der Siegelnähte wird die Siegelfestigkeit bei hohem Siegeldruck geprüft. Dabei wird unter Siegelfestigkeit die Kraft verstanden, die erforderlich ist, um eine unter definierten Bedingungen (50 N pro cm², 0,5 Sekunden glatte Siegelbalken) und den in der Tabelle angegebenen Siegeltemperaturen hergestellte Siegelnaht zu trennen. Die Siegelfestigkeit wird in Newton angegeben und auf einen 15 mm breiten Prüfstreifen bezogen.

Die Messung der $O_2$-Durchlässigkeit wird nach DIN 53 380 durchgeführt.

Beispiel

Zur Herstellung der in der Tabelle angegebenen Mehrschichtfolie wurden für die Schichten A in 98,6 Gew.-% einer Mischung aus 80 Gew.-% eines Ethylencopolymerisats mit 6 Mol-% Octen und mit einer Dichte von 0,911 g/cm³, einem Schmelzbereich von 120-125°C und einem Schmelzindex von 7 g/10 min bei 190°C/21,6 N und aus 20 Gew.-% eines hydrierten polycyclischen Harzes auf Basis Cyclopentadien (ESCOREZ 5000®) mit einem Molekulargewicht (Mn) von 520 und einem Erweichungspunkt von 85°C, 0,5 Gew.-% einer 1:1 Mischung aus Polyethylenwachs und Oxazolinwachs, 0,3 Gew.-% Polydimethylsiloxan mit einer kinematischen Viskosität von $10^6$ mm²/s, 0,5 Gew.-% N,N-Bis-(2-hydroxyethyl)-($C_{12}$-$C_{16}$)-alkylamin und 0,1 Gew.-% Siliziumdioxid eingearbeitet, diese Mischung ebenso wie ein modifiziertes Polypropylen, das 0,7 Gew.-% verseiftes, aufgepropftes Maleinsäureanhydrid enthält und einen Schmelzindex von 5 g/10 min bei 250°C/21,6 N aufweist, als die Haftvermittlerschichten C und E und einem Ethylen/Vinylacetat-Copolymerisat mit 55 Mol-% Vinylacetateinheiten, die zu 96 % verseift sind, als die Gassperrschicht D und der obengenannten Mischung für die Schicht A als die Schicht F coextrudiert, nach üblichen Verfahren mit der Basisfolie aus Polypropylen (der Dichte 0,905 g/cm³, mit dem Schmelzindex 3,3 g/10 min bei 230°C/21,6 N), die auf ihren anderen Oberflächen außerdem mit einer heißsiegelbaren Schicht A aus der genannten Mischung verbunden wird, verbunden und verstreckt, so daß eine beidseitig siegelbare Verbundfolie mit einer Längsreckung im Verhältnis 5:1 und einer Querreckung im Verhältnis 10:1 erhalten wurde.

Der Schichtaufbau und die Eigenschaften der fertigen Folie sind in nachfolgender Tabelle aufgeführt.

Tabelle

|  | Schichtaufbau | Schichtdicke cm |
|---|---|---|
| A | Mischung aus LLDPE, hydriertem Harz + Additiven | 1 |
| C | Haftvermittler | 0,5 |
| D | EVAL | 1 |
| E | Haftvermittler | 0,5 |
| F | Mischung aus LLDPE, hydriertem Harz + Additiven | 1 |
| Basisschicht | Polypropylen | 23 |
| A | Mischung aus LLDPE, hydriertem Harz + Additiven |  |

Folieneigenschaften

| Trübung % | 3,8 |
|---|---|
| Sauerstoffdurchlässigkeit $(cm^3/m^2 \cdot d \cdot bar)$ | 23 |
| Glanz (GE) | 82 |

Hochdrucksiegelung
Siegelfestigkeit N/15 mm

| 90°C | 3,0 |
|---|---|
| 100°C | 3,4 |
| 110°C | 3,8 |

## Patentansprüche

1. Heißsiegelbare mindestens monoaxial gereckte Mehrschichtfolie aus Propylenpolymeren als Basisschicht, die auf wenigstens einer Oberfläche eine Schichtkombination angeordnet hat, die sich von außen her bis zur Basisschicht zusammensetzt aus
A) einer heißsiegelbaren Außenschicht aus
a) 66,5 bis 94,5 Gew.-% eines linearen statistischen Ethylencopolymerisats niedriger Dichte (LLDPE),
b) 5 bis 30 Gew.-% eines niedermolekularen, mit dem LLDPE verträglichen Harzes, mit Ausnahme eines niedermolekularen Harzes von α-Olefinen mit höchstens 3 C-Atomen,
c) 0,3 bis 2 Gew.-% einer Mischung aus einem Polyethylenwachs und einem Oxazolinwachs,
d) 0,2 bis 1,5 Gew.-% Polydiorganosiloxan und
e) gegebenenfalls üblichen Additiven und Hilfsstoffen,
wobei die Summe aus den Komponenten a) bis d) immer 100 Gew.-% ergeben muß,
B) gegebenenfalls einer Schicht aus einem Propylenpolymeren,
C) einer Haftvermittlerschicht enthaltend modifiziertes Polyolefin,
D) einer Gassperrschicht auf Basis von verseiftem Ethylenvinylacetatcopolymerisat mit 40 bis 85 Mol-% Vinylacetateinheiten, die zu wenigstens 90 % verseift sind,
E) einer Haftvermittlerschicht enthaltend modifiziertes Polyolefin, und gegebenenfalls
F) einer Schicht aus LLDPE und gegebenenfalls den Komponenten b) - e),
wobei die Basisschicht auf ihrer anderen Oberfläche gegebenenfalls eine siegelbare Schicht A, eine Schichtkombination A bis E, eine Schichtkombination A bis F oder eine Schichtkombination B bis D oder eine Schichtkombination E und D oder eine Schicht aus einer Mischung aus den Polymeren der Schichten C und D trägt.

2. Mehrschichtfolie nach Anspruch 1, dadurch gekennzeichnet, daß die Schicht A aus 78 bis 89,1 Gew.-% der Komponente a), 10 bis 20 Gew.-% der Komponente b), 0,5 bis 1 Gew.-% der Komponente c) und 0,4 bis 1 Gew.-% der Komponente d) besteht.

3. Mehrschichtfolie nach Anspruch 1 oder 2, dadurch gekennzeichnet, daß die Komponente a) der Schicht A und F ein lineares, statistisches Ethylencopolymeres nie driger Dichte ist, das bis zu 12 Mol-%, vorzugsweise 2 bis 8 Mol-%, α-Olefinen mit $C_3$ bis $C_{10}$ einpolymerisiert enthält, vorzugsweise Propylen, Buten-1, Penten, Hexen, Octen, Nonen, Decen oder 4-Methyl-penten-1.

4. Mehrschichtfolien nach Ansprüchen 1 bis 3, dadurch gekennzeichnet, daß die Komponente a) eine Dichte <0,94, vorzugsweise von 0,900 bis 0,925, besonders bevorzugt 0,903 bis 0,92 g/cm³ aufweist.

5. Mehrschichtfolien nach Ansprüchen 1 bis 4, dadurch gekennzeichnet, daß als Komponente b) Collophonium, Dammarharze, Terpentinharze, Kohlenwasserstoffharze, Ketonharze, Phenolharze, chlorierte aliphatische oder aromatische Kohlenwasserstoffharze, vorzugsweise hydrierte polycyclische Kohlenwasserstoffharze verwendet werden.

6. Mehrschichtfolien nach Ansprüchen 1 bis 5, dadurch gekennzeichnet, daß als Komponente c) eine Mischung aus einem Polyethylenwachs und einem Oxazolinwachs, hergestellt aus Stearinsäure und einem Aminoalkohol, vorzugsweise Trishydroxymethylaminomethan eingesetzt wird.

7. Mehrschichtfolie nach Ansprüchen 1 bis 6, dadurch gekennzeichnet, daß die Gassperrschicht D aus einem Ethylen/Vinylacetat-Copolymerisat mit 60 bis 75 Mol-% Vinylacetateinheiten besteht, die zu mehr als 95 Mol-%, verseift sind, und die gegebenenfalls noch Polyvinylalkohol oder Polyamid enthalten kann.

8. Mehrschichtfolie nach Ansprüchen 1 bi, dadurch gekennzeichnet, daß die Schichten C und E aus mit Carboxylgruppen modifizierten Homo- oder Co-Polyolefinen, vorzugsweise aus Polypropylen oder Polyethylen, das jeweils mindestens ein Monomer aus der Gruppe der $\alpha,\beta$-einfach ungesättigten Dicarbonsäuren, wie z.B. Maleinsäure, Fumarsäure, Itaconsäure oder deren Säureanhydride, Säureester, Säureamide und Säureimide aufgepfropft enthält, Copolymerisate von Ethylen mit $\alpha,\beta$-einfach ungesättigten Carbonsäuren, vorzugsweise Acrylsäure, Methacrylsäure und/oder deren Metallsalzen (Zn, Na) und/oder deren Alkyl($C_1$-$C_4$)estern; entsprechende Pfropfpolymere der genannten Monomere auf Polyolefine wie Polyethylen oder Polypropylen, partiell verseifte Ethylen/Vinylacetat-Copolymerisate, die gegebenenfalls mit einem Monomer der obengenannten ungesättigten Säuren pfropfpolymerisiert sind und einen niedrigen Verseifungsgrad aufweisen, oder Mischungen der genannten Polymeren aufgebaut sind.

9. Mehrschichtfolie nach Ansprüchen 1 bis 8, dadurch gekennzeichnet, daß die Schichten A und C und/oder die Schichten B und C und/oder die Schichten E und F oder die Schichten C und D und/oder die Schichten D und E zu einer Schicht durch Vermischen der entsprechenden Polymeren vereinigt sind.

10. Verwendung der Mehrschichtfolie nach Ansprüchen 1 bis 9 als Verpackungsmaterial, vorzugsweise für Lebensmittel.

**Claims**

1. A heat-sealable, at least monoaxially stretched multilayer film of propylene polymers as the base layer which has a layer combination arranged on at least one surface which, from outside to the base layer, is composed of
A) a heat-sealable outer layer of
a) 66.5 to 94.5% by weight of a linear, low-density statistical ethylene copolymer (LLDPE),
b) 5 to 30% by weight of a low molecular weight resin compatible with the LLDPE, excluding a low molecular weight resin of $\alpha$-olefins containing at most 3 C atoms,
c) 0.3 to 2% by weight of a mixture of a polyethylene wax and an oxazoline wax,
d) 0.2 to 1.5% by weight polydiorganosiloxane and
e) optionally standard additives and auxiliaries, the sum of components a) to d) always having to be 100% by weight,
B) optionally a layer of a propylene polymer,
C) a primer layer containing modified polyolefin,
D) a gas barrier layer based on hydrolyzed ethylene/vinyl acetate copolymer containing 40 to 85 mol-% vinyl acetate units of which at least 90% are hydrolyzed,
E) a primer layer containing modified polyolefin and, optionally,
F) a layer of LLDPE and, optionally, components b)–e), the base layer optionally comprising on its other surface a sealable layer A, a layer combination A to E, a layer combination A to F or a layer combination B to D or a layer combination E and D or a layer of a mixture of the polymers of layers C and D.

2. A multilayer film as claimed in claim 1, characterized in that layer A consists of 78 to 89.1% by weight component a), 10 to 20% by weight component b), 0.5 to 1% by weight component c) and 0.4 to 1% by weight component d).

3. A multilayer film as claimed in claim 1 or 2, characterized in that component a) of layer A and F is a linear, low-density statistical ethylene copolymer which contains up to 12 mol-% and preferably from 2 to 8 mol-% $C_3$–$C_{10}$ $\alpha$-olefins, preferably propylene, 1-butene, pentene, hexene, octene, nonene, decene or 4-methyl-1-pentene, in copolymerized form.

4. Multilayer films as claimed in claims 1 to 3, characterized in that component a) has a density of <0.94, preferably from 0.900 to 0.925 and more preferably from 0.903 to 0.92 g/cm³.

5. Multilayer films as claimed in claims 1 to 4, characterized in that collophony, dammar resins, turpentine resins, hydrocarbon resins, ketone resins, phenolic resins, chlorinated aliphatic or aromatic hydrocarbon resins, preferably hydrogenated polycyclic hydrocarbon resins, are used as component b).

6. Multilayer films as claimed in claims 1 to 5, characterized in that a mixture of a polyethylene wax and an oxazoline wax prepared from stearic acid and an aminoalcohol, preferably tris-hydroxymethyl aminomethane, is used as component c).

7. A multilayer film as claimed in claims 1 to 6, characterized in that the gas barrier layer D consists of an ethylene/vinyl acetate copolymer containing 60 to 75 mol-% vinyl acetate units, of which more than 95 mol-% are hydrolyzed and which may optionally contain polyvinyl alcohol or polyamide.

8. A multilayer film as claimed in claims 1 to 7, characterized in that layers C and E are made up of carboxyl-modified homopolyolefins or copolyolefins, preferably polypropylene or polyethylene, which contains at least one grafted-on monomer from the group consisting of $\alpha,\beta$-mono-unsaturated dicarboxylic acids, such as for example maleic acid, fumaric acid, itaconic acid or anhydrides, esters, amides and imides thereof, copolymers of ethylene with $\alpha,\beta$-mono-unsaturated carboxylic acids, preferably acrylic acid, methacrylic acid and/or metal salts (Zn, Na) and/or alkyl ($C_1$–$C_4$) esters thereof; corresponding graft polymers of the above-mentioned monomers on polyolefins, such as polyethylene or polyproylene, partially hydrolyzed ethylene/vinyl acetate copolymers which are optionally graft-polymerized with a monomer of the above-mentioned unsaturated acids and have a low degree of hydrolysis, or mixtures of the above-mentioned polymers.

9. A multilayer film as claimed in claims 1 to 8, characterized in that layers A and C and/or layers B and C and/or layers E and F layers C and D and/or layers D and E are combined to form a layer by mixing of the corresponding polymers.

10. The use of the multilayer films claimed in claims 1 to 9 as a packaging material, preferably for foods.

**Revendications**

1. Feuille multicouche thermosoudable, étirée au moins monoaxialement, qui comporte sur au moins une face une combinaison de couches ayant la composition suivante, depuis la couche extérieure jusqu'à la couche de base

A) une couche extérieure thermosoudable consistant en

a) 66,5 à 94,5% en poids d'un copolymère statistique linéaire d'éthylène de basse densité (LLDPE),

b) 5 à 30% en poids d'une résine de bas poids moléculaire compatible avec le LLDPE, à l'exception d'une résine de bas poids moléculaire d'$\alpha$-oléfines ayant au plus 3 atomes de carbone,

c) 0,3 à 2% en poids d'un mélange d'une cire de polyéthylène et d'une cire d'oxazoline,

d) 0,2 à 1,5% en poids de polydiorganosiloxanne et

e) éventuellement des additifs et agents auxilaires habituels, la somme des composants a) à d) devant toujours donner 100% en poids,

B) éventuellement une couche d'un polymère de propylène,

C) une couche d'agent d'adhérence contenant une polyoléfine modifiée,

D) une couche imperméable aux gaz à base de copolymère éthylène-acétate de vinyle saponifié, à 40–85 mol% de motifs acétate de vinyle qui sont saponifiés à au moins 90%,

E) une couche d'agent d'adhérence contenant une polyoléfine modifiée et éventuellement

F) une couche de LLDPE et éventuellement les composants b) à e), la couche de base portant éventuellement sur son autre face une couche soudable A, une combinaison de couches A à E, une combinaison de couches A à F ou une combinaison de couches B à D ou une combinaison de couches E et D ou une couche d'un mélange des polymères des couches C et D.

2. Feuille multicouche selon la revendication 1, caractérisée en ce que la couche A consiste en 78 à 89,1% en poids du composant a), 10 à 20% en poids du composant b), 0,5 à 1% en poids du composant c) et 0,4 à 1% en poids du composant d).

3. Feuille multicouche selon la revendication 1 ou 2, caractérisée en ce que le composant a) des couches A et F est un copolymère statistique linéaire d'éthylène de faible densité qui contient jusqu'à 12 mol%, de préférence 2 à 8 mol%, d'$\alpha$-oléfines en $C_3$–$C_{10}$ polymérisées, de préférence propylène, butène-1, pentène, hexène, octène, nonène, décène ou 4-méthylpentène-1.

4. Feuilles multicouches selon les revendications 1 à 3, caractérisées en ce que le composant a) a une densité <0,94, de préférence de 0,900 à 0,925, en particulier de 0,903 à 0,92 g/cm³.

5. Feuilles multicouches selon les revendications 1 à 4, caractérisées en ce que l'on utilise comme composant b) la colophane, les résines dammar, les résines de térébenthine, les résines d'hydrocarbures, les résines de cétones, les résines phénoliques, les résines d'hydrocarbures aliphatiques ou aromatiques chlorés, de préférence les résines d'hydrocarbures polycycliques hydrogénées.

6. Feuilles multicouches selon les revendications 1 à 5, caractérisées en ce que l'on utilise comme composant c) un mélange d'une cire de polyoléfine et d'une cire d'oxazoline fabriquée à partir d'acide stéarique et d'un amino-alcool, de préférence le trishydroxyméthylaminométhane.

7. Feuille multicouche selon les revendications 1 à 6, caractérisée en ce que la couche étanche aux gaz D consiste en un copolymère éthylène-acétate de vinyle à 60–75 mol% de motifs d'acétate de vinyle, qui sont saponifiés à plus de 95 mol%, et peut encore contenir éventuellement de l'alcool polyvinylique ou un polyamide.

8. Feuille multicouche selon les revendications 1 à 7, caractérisée en ce que les couches C et E sont constituées d'homo- ou co-polyoléfines modifiées par des groupes carboxyles, de préférence de polypropylène ou de polyéthylène qui contient au moins un monomère greffé du groupe des acides dicarboxyliques $\alpha,\beta$-monoinsaturés tels que par exemple acide maléique, acide fumarique, acide itaconique ou leurs anhydrides, leurs esters, leurs amides et leurs imides, de copolymères d'éthylène avec les acides carboxyliques $\alpha,\beta$-monoinsaturés, de préférence acide acrylique, acide méthacrylique et/ou leurs sels métalliques (Zn, Na) et/ou leurs esters d'alkyles en $C_1$–$C_4$; de polymères greffés correspondants des monomères cités sur des polyoléfines telles que polyéthylène ou polypropylène, de copolymères éthylè-

8

ne-acétate de vinyle partiellement saponifiés qui sont éventuellement polymérisés par greffage avec un monomère des acides insaturés cités ci-dessus et présentent un faible degré de saponification, ou de mélanges des polymères cités.

9. Feuille multicouche selon les revendications 1 à 8, caractérisée en ce que les couches A et C et/ou les couches B et C et/ou les couches E et F ou les couches C et D et/ou les couches D et E peuvent être réunies en une couche par mélange des polymères correspondants.

10. Utilisation de la feuille multicouche selon les revendications 1 à 9 comme matériau d'emballage, de préférence pour les aliments.